# EUROPEAN PATENT APPLICATION

(11) **EP 4 489 178 A1**
(43) Date of publication of application: **08.01.2025**
(21) Application number: 23763368.0
(22) Date of filing: 24.02.2023
(51) Int. Cl.: H01M 10/42, H01M 10/48, H02J 7/00

(54) **HOLDING DEVICE, INFORMATION PROCESSING DEVICE, INFORMATION PROCESSING METHOD, PROGRAM, AND RECORDING MEDIUM**

(30) Priority: 02.03.2022 JP 2022031447
(71) Applicant: HONDA MOTOR CO., LTD., Minato-ku Tokyo 107-8556 (JP)
(72) Inventor: IWAMOTO, Takuya, Wako-shi, Saitama 351-0193 (JP)
(74) Representative: Weickmann & Weickmann PartmbB
(86) International application number: PCT/JP2023/006851
(87) International publication number: WO 2023/167109

(57) **Abstract**

A holding apparatus (10) includes a first connection portion (15a) to which a connection portion (101b) of an electric storage device (101) is detachably connected, and a receiving part (10a) configured to receive stored information stored in a storage part of the electric storage device (101) when the connection portion (101b) of the electric storage device (101) is connected to the first connection portion (101b). The stored information includes attachment counterpart information, and the attachment counterpart information is information on a power apparatus (6, 7) stored when the electric storage device (101) is mounted on the power apparatus (6, 7) different from the holding apparatus (10).

## Description

### TECHNICAL FIELD

This invention relates to a holding apparatus, information processing apparatus, information processing method, program and storage medium.

### BACKGROUND ART

Conventionally, there is known an apparatus configured to accommodate a battery in a detachable manner (see Patent Literature 1, for example). The apparatus described in Patent Literature 1 is placed in a station for exchanging the battery and is configured to read use history information from the battery used in a vehicle.

### CITATION LIST

### PATENT LITERATURE

Patent Literature 1: International Publication No. 2019/181702

### DISCLOSURE OF INVENTION

### PROBLEMS TO BE SOLVED BY THE INVENTION

However, simply reading use history information from the battery, as in the apparatus described in Patent Literature 1, makes it difficult to provide information that is highly satisfactory for a user, for example, after removing the battery from the holding apparatus and installing it in another apparatus for use.

### MEANS FOR SOLVING PROBLEM

An aspect of the present invention is a holding apparatus including a first connection portion to which a connection portion of an electric storage device is detachably connected, and a receiving part configured to receive stored information stored in a storage part of the electric storage device when the connection portion of the electric storage device is connected to the first connection portion. The stored information includes information on a power apparatus stored when the electric storage device is mounted on the power apparatus different from the holding apparatus.

An another aspect of the present invention is an information processing apparatus communicably connected to a holding apparatus, the holding apparatus including a first connection portion to which a connection portion of an electric storage device is detachably connected and a receiving part receiving stored information stored in a storage part of the electric storage device when the connection portion of the electric storage device is connected to the first connection portion. The stored information includes attachment counterpart information as information on a power apparatus stored when the electric storage device is mounted on the power apparatus different from the holding apparatus, and the receiving part of the holding apparatus receives first stored information including first attachment counterpart information as the attachment counterpart information when the electric storage device is mounted on the power apparatus in a first period, and second stored information including second attachment counterpart information as the attachment counterpart information when the electric storage device is mounted on another power apparatus different from the power apparatus in a second period different from the first period. The information processing apparatus includes (i) another receiving part configured to receive an integration result of the first stored information and the second stored information received by the receiving part of the holding apparatus, the integration result being integrated by an integration unit of the holding apparatus, or (ii) another receiving part configured to receive the first stored information and the second stored information received by the receiving part of the holding apparatus; and another integration unit configured to integrate the first stored information and the second stored information received by the receiving part.

A further other aspect of the present invention is an information processing method processing information from a holding apparatus. The holding apparatus includes a first connection portion to which a connection portion of an electric storage device is detachably connected and a receiving part receiving stored information stored in a storage part of the electric storage device when the connection portion of the electric storage device is connected to the first connection portion, and the stored information includes attachment counterpart information as information on a power apparatus stored when the electric storage device is mounted on the power apparatus different from the holding apparatus. The information processing method includes receiving first stored information including first attachment counterpart information as the attachment counterpart information when the electric storage device is mounted on the power apparatus in a first period, receiving second stored information including second attachment counterpart information as the attachment counterpart information when the electric storage device is mounted on another power apparatus different from the power apparatus in a second period different from the first period, and integrating the first stored information and the second stored information as a integration result.

A further other aspect of the present invention is a program for executing a process based on information from a holding apparatus in a computer. The holding apparatus includes a first connection portion to which a connection portion of an electric storage device is detachably connected and a receiving part receiving stored information stored in a storage part of the electric storage device when the connection portion of the electric storage device is connected to the first connection portion. The stored information includes attachment counterpart information as information on a power apparatus stored when the electric storage device is mounted on the power apparatus different from the holding apparatus. The program executes receiving first stored information including first attachment counterpart information as the attachment counterpart information when the electric storage device is mounted on the power apparatus in a first period, receiving second stored information including second attachment counterpart information as the attachment counterpart information when the electric storage device is mounted on another power apparatus different from the power apparatus in a second period different from the first period, and integrating the first stored information and the second stored information as a integration result.

A further other aspect of the present invention is a computer-readable storage medium configured to store the above program.

### EFFECT OF THE INVENTION

According to the present invention, it is possible to provide information that is highly satisfactory to a user of an electric storage device.

### BRIEF DESCRIPTION OF THE DRAWINGS

FIG. 1 is a diagram schematically illustrating an overall configuration of a management system in which a holding apparatus according to an embodiment of the present invention is embedded;
FIG. 2A is a perspective view illustrating an external shape of the holding apparatus according to the embodiment of the present invention, and illustrating a state in which a battery is detached therefrom;
FIG. 2B is a perspective view illustrating the external shape of the holding apparatus according to the embodiment of the present invention, and illustrating a state in which the battery is stored therein;
FIG. 3 is a view schematically illustrating a configuration of an electric circuit of a main part of the holding apparatus according to the embodiment of the present invention;
FIG. 4 is a diagram schematically illustrating a usage mode of the battery in the management system of FIG. 1;
FIG. 5 is a block diagram illustrating a schematic configuration of a main part of the management system of FIG. 1;
FIG. 6 is a diagram illustrating an example of a use history of the battery;
FIG. 7 is a flowchart illustrating an example of a process executed by the server apparatus of FIG. 5; and
FIG. 8 is a modification of FIG. 5.

### DESCRIPTION OF EMBODIMENT

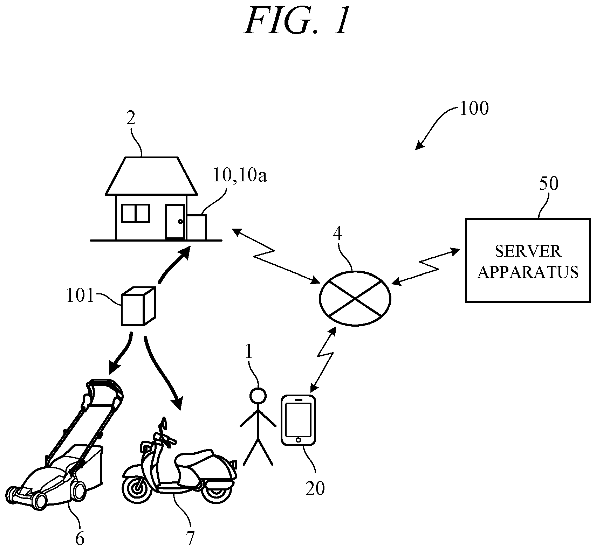

Hereinafter, an embodiment of the present invention will be described with reference to FIGs. 1 to 8. A holding apparatus according to an embodiment of the present invention is an apparatus that houses and holds a storage battery (a secondary battery) such as a battery. This holding apparatus has a function of a charging apparatus that charges a battery using power supplied from the outside and a function of a power feeding apparatus that supplies power to the outside using power supplied from the battery. The holding apparatus may have the function of one of the charging apparatus or the power feeding apparatus. The holding apparatus may not have the functions of the charging apparatus and the power feeding apparatus.

The holding apparatus according to the present embodiment is configured as, for example, a stationary electric storage apparatus installed on site at a house. The electric storage apparatus can charge a battery with electric power from a system power source and can supply electric power to a load in a house with electric power from the battery during a power failure. Further, by configuring the battery to be detachable from the electric storage apparatus, the battery can be mounted on another apparatus (for example, an electric work machine or an electric vehicle), and power from the battery can be supplied to the apparatus. The electric storage apparatus can be installed either outdoors or indoors.

The electric storage apparatus can be embedded in a management system that manages information. FIG. 1 is a diagram schematically illustrating an overall configuration of a management system 100 in which a holding apparatus (electric storage apparatus) according to the present embodiment is embedded. As illustrated in FIG. 1, the management system 100 includes an electric storage apparatus 10 installed adjacent to a house 2 where a user 1 who uses the management system 100 resides, a user terminal 20 owned by the user 1, and a server apparatus 50. The electric storage apparatus 10 includes a controller 10a (referred to as a device controller) capable of communicating with an external apparatus.

The device controller 10a, the user terminal 20, and the server apparatus 50 are connected to a network 4 including a public wireless communication network represented by an Internet network, a mobile phone network, or the like, and can communicate with each other via the network 4. The network 4 also includes a closed communication network provided for each predetermined managed area, for example, a wireless LAN, Wi-Fi (registered trademark), Bluetooth (registered trademark), and the like.

The user terminal 20 includes, for example, a mobile terminal such as a smartphone, a tablet terminal, a mobile phone, and various wearable terminals carried and used by the user. The user terminal 20 may be a device other than a mobile terminal, for example, a personal computer installed in the house 2. The user terminal 20 includes, as a functional configuration, an input unit such as a touch panel to which the user inputs various commands, an output unit such as a display that outputs information to the user, and a communication unit that communicates with the server apparatus 50 and the like via the network 4.

The user 1 inputs user information such as an address, a telephone number, and an email address of the user 1 and apparatus information such as an installation place and a model of the electric storage apparatus 10 in advance via the user terminal 20 (input unit). Further, the user 1 also inputs device information including use history information on the electric apparatus owned by the user 1 via the user terminal 20. The user information, the apparatus information, and the device information are transmitted along with an identification ID (user ID) of the user, an identification ID of the electric storage apparatus 10, and an identification ID of the electric apparatus from the user terminal 20 to the server apparatus 50 via the communication unit. FIG. 1 illustrates an electric lawn mower 6 and an electric two-wheeled vehicle 7 as an example of the electric apparatus used by a user 1. One or a plurality of batteries 101 charged by the electric storage apparatus 10 are mounted on the lawn mower 6 and the two-wheeled vehicle 7.

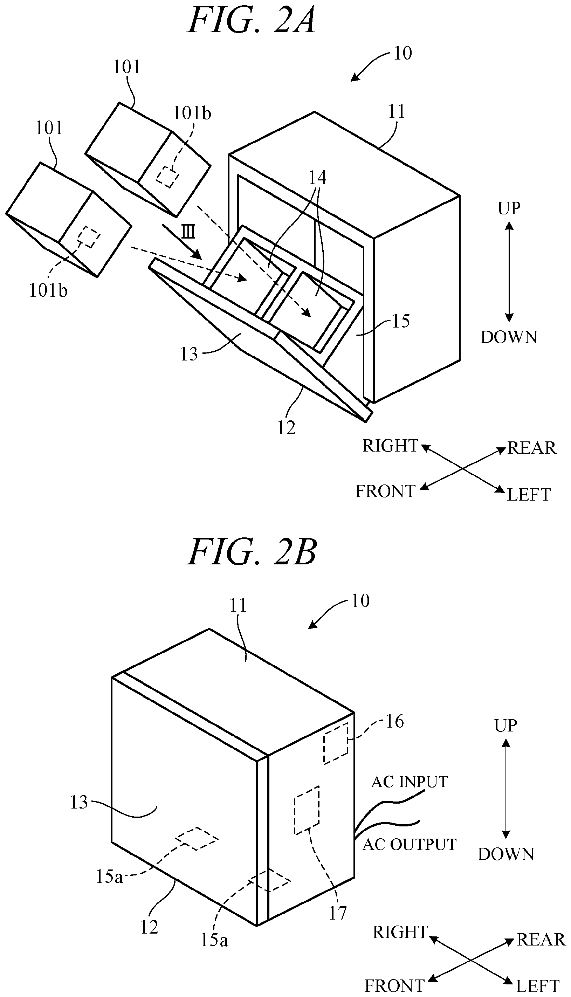

FIGs. 2A and 2B are perspective views schematically illustrating an external shape of the electric storage apparatus 10 according to the embodiment of the present invention. In particular, FIG. 2A illustrates a state in which the battery 101 is detached from the electric storage apparatus 10, and FIG. 2B illustrates a state in which the battery 101 is stored in the electric storage apparatus 10. For convenience, the front-rear direction (length direction), the left-right direction (width direction), and the up-down direction (height direction) are defined as illustrated in the drawing, and a configuration of each unit will be described below according to these definitions. The lower side in the up-down direction corresponds to the direction of gravity (vertical direction).

As illustrated in FIGs. 2A and 2B, the electric storage apparatus 10 includes a substantially rectangular parallelepiped casing 11 of which a front surface is opened, and a lid 13 which is rotatably supported by the casing 11 with a hinge portion 12 provided at a lower end of the front surface of the casing 11 as a fulcrum. The lid 13 is formed in a substantially rectangular shape so that the opening on the front surface of the casing 11 is closed. A housing portion 15 forming a housing chamber 14 of the battery 101 is provided on the rear surface of the lid 13, and the housing portion 15 rotates in the front-rear direction integrally with the lid 13. The upper surface of the casing 11 may be opened, and the lid 13 may be provided to cover the opening.

The battery 101 is a portable battery that has a weight of, for example, about 10 kg, and a handle (not illustrated) that is gripped by a user is provided on an upper surface of the battery 101. The battery 101 may be heavier or lighter than 10 kg. The battery 101 is, for example, a lithium ion battery and has a substantially rectangular parallelepiped shape that is vertically long as a whole. The battery 101 is not limited to a rectangular parallelepiped shape, and any of various shapes such as a cylindrical shape can be used. The number of batteries 101 in the casing 11 is not limited to two, and may be one or three or more. Instead of being arranged side by side in the left-right direction, or in addition to being arranged side by side in the left-right direction, the plurality of batteries 101 may be arranged side by side in the up-down direction or the front-rear direction. In the housing portion 15, a housing chamber 14 is formed according to a shape, number, and arrangement of the batteries 101.

The battery 101 is housed in the housing chamber 14 from obliquely above with the lid 13 opened. After the battery 101 is housed, the lid 13 is rotated rearward, and the battery 101 is stored in the casing. At this time, a battery-side terminal 101b provided on the bottom surface of the battery 101 (battery bottom surface) and an apparatus-side terminal 15a provided on the bottom surface of the housing portion 15 are connected. For example, the battery-side terminal 101b is disposed in a recess formed on the bottom surface of the battery, and the apparatus-side terminal 15a is disposed in a protrusion formed on the bottom surface of the housing portion. Accordingly, when the battery-side terminal 101b and the apparatus-side terminal 15a are connected, the recess and the protrusion are fitted to each other, and the battery 101 is positioned and held in the housing portion 15. The positions of the terminals 101a and 15a are not limited to the above-described positions.

Although illustrated simply in FIG. 2B, the electric storage apparatus 10 includes, for example, a communication unit 16 capable of communicating with the server apparatus 50 and a power conversion unit 17 that converts an alternating current into a direct current of a predetermined voltage and converts a direct current into an alternating current of a predetermined frequency in the casing 11. The power conversion unit 17 includes electric components such as a control unit, a junction box, and a pass-through.

The electric storage apparatus 10 includes an input terminal to which alternating-current power is input and an output terminal from which alternating-current power is output. For example, a male plug is provided in the input terminal, and the electric storage apparatus 10 is connected to a system power supply (commercial power supply) via a plug. Accordingly, alternating-current power is input from the system power supply to the electric storage apparatus 10. For example, a female outlet (specific outlet) is provided in the output terminal, and a load (specific load) is connected to the outlet. Accordingly, alternating-current power is output from the electric storage apparatus 10 to the load.

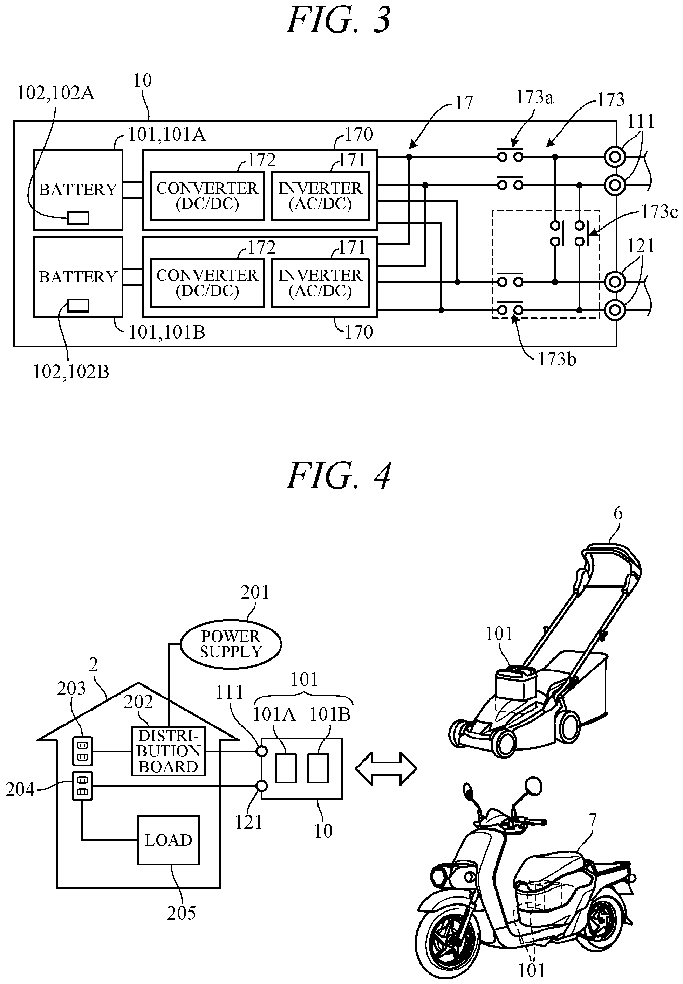

FIG. 3 is a view schematically illustrating a configuration of an electric circuit of the electric storage apparatus 10. As illustrated in FIG. 3, alternating-current power is input to the electric storage apparatus 10 from a system power supply via an input terminal 111. On the other hand, alternating-current power is output from the electric storage apparatus 10 to the load via an output terminal 121. The power conversion unit 17 includes a pair of inverter units 170 provided to correspond to a pair of batteries 101 (referred to as a first battery 101A and a second battery 101B) and a switch circuit 173. The input terminal 111 and the output terminal 121 are connected in parallel to the pair of inverter units 170 via the switch circuit 173.

The first battery 101A and the second battery 101B are connected to one and the other of the pair of inverter units 170 via the apparatus-side terminals 15a (FIG. 2B). Each inverter unit 170 includes an inverter 171 and a converter 172. The inverter 171 is an AC/DC inverter, and includes a filter circuit and an NF circuit in addition to an inverter circuit that has a switching element. The inverter 171 converts a direct current into an alternating current through an operation of the switching element, and generates an alternating-current waveform. The converter 172 is a DC/DC converter, and includes a rectifier circuit in addition to a bridge circuit that has a switching element. The converter 172 boosts or steps down a DC voltage to a predetermined voltage through an operation of the switching element.

The switch circuit 173 includes a switch 173a that connects (on) or cuts (off) the input terminal 111 and the pair of inverter units 170, a switch 173b that connects (on) or cuts (off) the output terminal 121 and the pair of inverter units 170, and a switch 173c that connects (on) or cuts (off) the input terminal 111 and the output terminal 121 without involving the switches 173a and 173b. The switches 173b and 173c are C contact switches in which one of the switches is turned on and the other switch is turned off. Accordingly, the switches 173b and 173c are not simultaneously turned on.

When the switch 173a is turned on and the switches 173b and 173c are turned off, power from the system power supply is supplied to the pair of batteries 101 via the input terminal 111 and the pair of inverter units 170, and the batteries 101 are charged (charging operation). When the switch 173b is turned on and the switches 173a and 173c are turned off, power from the pair of batteries 101 is supplied to a load via the pair of inverter units 170 and the output terminal 121 (power supply operation). When the switch 173c is turned on and the switches 173a and 173b are turned off, pass-through occurs, and power from the system power supply is supplied to the load as it is via the input terminal 111 and the output terminal 121.

On/off of the switches 173a to 173c, that is, the operation of the switch circuit 173 and the operation of the switching element of the inverter unit 170 is controlled by the device controller 101a (FIG. 1). For example, when the power supplied from the system power supply to the electric storage apparatus 10 is interrupted due to a power failure, the device controller 101a controls the operations of the switch circuit 173 and the inverter unit 170 so that the battery 101 performs the power supply operation. When a charging rate of the battery 101 is insufficient, the device controller 101a controls operations of the switch circuit 173 and the inverter unit 170 so that the battery 101 performs a charging operation.

Each of the pair of batteries 101 is a battery pack surrounded by a casing and includes a battery ECU 102 (referred to as a first battery ECU 102A and a second battery ECU 102B). The battery ECU 102 includes an arithmetic device that includes a CPU, a ROM, a RAM, and other peripheral circuits and is configured to be able to communicate with the device controller 10a and to be able to communicate with a controller of an electric motor apparatus (a lawn mower or a vehicle) on which the battery 101 is mounted.

The battery ECU 102 has a function of monitoring a state of the battery 101. More specifically, the battery 101 includes a detection circuit that detects the state of each battery 101, that is, a sensor that detects various physical quantities such as a current, a voltage, and a temperature of each battery 101. The battery ECU 102 calculates a state of charge (SOC) and a state of health (SOH) of each battery 101 based on the physical quantities detected by the detection circuit. The information is stored as battery information along with a battery-specific identification ID (battery ID) in a memory of the battery ECU 102 or another storage unit provided in the battery 101.

When the battery 101 is housed in the electric storage apparatus 10, the battery ECU 102 and the device controller 10a (FIG. 1) are communicably connected via a communication line or without involving a communication line. Accordingly, the battery information with the battery ID is transmitted to the device controller 10a. In the storage unit of the battery 101, information (such as use history information) obtained by further communicating with the control unit of the electric apparatus (a lawn mower or a vehicle) is stored with an identification ID (a working machine ID or a vehicle ID) of the electric apparatus. The stored information is transmitted to the device controller 101a.

FIG. 4 is a diagram schematically illustrating a usage mode of the battery 101 together with an electric circuit in the house 2. As illustrated in FIG. 4, the power from a system power supply 201 supplied into the house 2 is divided in two directions via a distribution board 202. The power on one side after the power distribution is supplied to a home appliance via a normal outlet 203. The power on the other side after the power distribution is supplied to the specific outlet 204 via the input terminal 111, the pass-through in the electric storage apparatus 10, and the output terminal 121. As described above, the battery 101 is connected to the output terminal 121 via the electric circuit in the electric storage apparatus 10 (FIG. 3), and power can be supplied from the battery 101 to the output terminal 121.

The specific load 205 is connected to the specific outlet 204. The specific load 205 is a specific electric apparatus, such as a refrigerator or a communication device, which is required to be continuously operated even during a power failure. Accordingly, the specific load 205 can be operated with power from the electric storage apparatus 10 during a power failure. A load ID for identifying the specific load 205 is attached in advance to the specific load 205.

The battery 101 housed in the electric storage apparatus 10 is detached by the user 1 and mounted on a mobile power apparatus such as the lawn mower 6 or the two-wheeled vehicle 7. For example, the single battery 101 is mounted on the lawn mower 6. The working motor of the lawn mower 6 is driven with electric power from the battery 101, and a mowing operation is performed accordingly. For example, one pair of batteries 101 is mounted on the two-wheeled vehicle 7. A traveling motor of the two-wheeled vehicle 7 is driven with electric power from the pair of batteries 101, and the two-wheeled vehicle 7 travels accordingly.

The lawn mower 6 includes a control unit that controls the working motor based on signals from various sensors mounted on the lawn mower 6. The control unit of the lawn mower 6 stores use history information of the lawn mower 6, that is, use history information including operation information such as an operation start time, an operation end time, a continuous operation time, maximum power, and power consumption by the lawn mower 6, in association with an identification ID (working machine ID) of the lawn mower 6. When the battery 101 is mounted on the lawn mower 6, the battery ECU 102 can calculate use history information of the lawn mower 6 related to the change in the SOC based on the change in the SOC of the battery 101 and can acquire the use history information. The use history information can also be acquired by the battery ECU 102 communicating with the control unit of the lawn mower 6 at a predetermined timing, such as a time at which a mowing operation is completed. The information acquired by the battery ECU 102 in this way is stored in the memory of the battery ECU 102 or another storage unit provided in the battery 101.

The two-wheeled vehicle 7 includes a control unit that controls the traveling motor based on signals from various sensors mounted on the two-wheeled vehicle 7. The control unit of the two-wheeled vehicle 7 stores the use history information of the two-wheeled vehicle 7, that is, use history information including operation information such as an operation start time, an operation end time, a continuous operation time, a maximum output, and power consumption of the two-wheeled vehicle 7 in association with an identification ID (vehicle ID) of the two-wheeled vehicle 7. When the battery 101 is mounted on the two-wheeled vehicle 7, the battery ECU 102 can calculate the use history information of the two-wheeled vehicle 7 related to the change in the SOC based on the change in the SOC of the battery 101 and can acquire the use history information. The use history information can also be acquired by the battery ECU 102 communicating with the control unit of the two-wheeled vehicle 7 at a predetermined timing such as a time at which an operation of the two-wheeled vehicle 7 ends. The information acquired by the battery ECU 102 in this way is stored in the memory of the battery ECU 102 or another storage unit provided in the battery 101.

After completion of the work of the lawn mower 6 or after completion of the driving of the two-wheeled vehicle 7, when the battery 101 is detached from these electric apparatuses and accommodated in the electric storage apparatus 10, the battery ECU 102 and the device controller 10a communicate with each other, and the use history information stored in the memory of battery ECU 102 is transmitted to the device controller 10a along with the working machine ID or the vehicle ID. Accordingly, the device controller 10a can ascertain an operating status of the electric apparatus (the lawn mower 6 or the two-wheeled vehicle 7) in which the battery 101 is used.

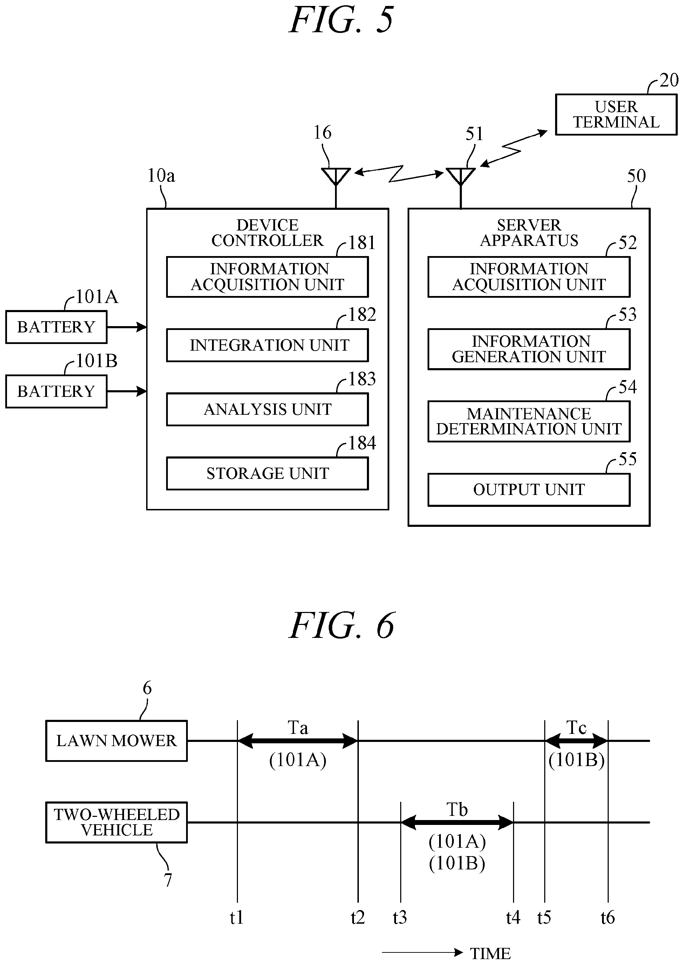

FIG. 5 is a block diagram mainly illustrating schematic configurations of the device controller 10a and the server apparatus 50 in the management system 100 of FIG. 1. Each of the device controller 10a and the server apparatus 50 includes an arithmetic device that includes a CPU, a ROM, a RAM, and other peripheral circuits. The device controller 10a includes the communication unit 16 (FIG. 2B), and the server apparatus 50 includes a communication unit 51. Both the communication units 16 and 51 function as a transmitting unit and a receiving unit, and the device controller 10a and the server apparatus 50 can communicate with each other via the communication units 16 and 51 and the network 4 (FIG. 1).

As illustrated in FIG. 5, the device controller 10a includes, as a functional configuration, an information acquisition unit 181, an integration unit 182, an analysis unit 183, and a storage unit 184.

When the first battery 101A and the second battery 101B are housed in the housing chamber 14 of the electric storage apparatus 10, the information acquisition unit 181 communicates with the first battery ECU 102A and the second battery ECU 102B. Then, the use history information stored in a storage unit of the first battery 101A (a memory or the like of the first battery ECU 102A) and a storage unit of the second battery 101B (a memory or the like of the second battery ECU 102B), that is, the use history information on which the working machine ID or the vehicle ID is attached, is acquired. The use history information is acquired whenever the batteries 101A and 101B are housed in the housing chamber 14.

Further, the information acquisition unit 181 acquires information on the power supplied from the system power supply 201 or the battery 101 to the specific load 205 via the output terminal 121, more specifically, information on the amount of power, along with the load ID associated with the specific load 205. This information includes both information on power supplied from the system power supply 201 to the load 205 and information on power supplied from the battery 101 to the load 205. The information acquired by the information acquisition unit 181 is stored in the storage unit 184.

FIG. 6 is a diagram illustrating an example of a use history of the battery 101. In FIG. 6, work is performed by the lawn mower 6 using the first battery 101A in the period Ta from time points t1 to t2, then the two-wheeled vehicle 7 is driven using the first battery 101A and the second battery 101B in the period Tb from time points t3 to t4, and then work is performed by the lawn mower 6 using the second battery 101B in the period Tc from time points t5 to t6. In such a situation, the information acquisition unit 181 acquires the use history information of the period Ta of the lawn mower 6 from the storage unit of the first battery 101A at a time point t2, acquires the use history information of the period Tb of the two-wheeled vehicle 7 from the storage unit of the first battery 101A and the storage unit of the second battery 101B at the time point t4, and acquires the use history information of the period Tc of the lawn mower 6 from the storage unit of the second battery 101B at the time point t6.

The integration unit 182 integrates the use history information acquired by the information acquisition unit 181 into the information on the electric apparatus having the same identification ID stored in advance in the storage unit 184. For example, the use history information of the period Ta and the use history information of the period Tc in FIG. 6 are integrated as the use history information of the lawn mower 6. More specifically, when the use history information associated with the same working machine ID is obtained at the time point t6 after storing of the use history information in the storage unit 184 at the time point t2, the use history information newly obtained is integrated with the use history information stored in storage unit 184 and the use history information of the lawn mower 6 stored in the storage unit 184 is updated. That is, the information on the integration result by the integration unit 182 is stored in the storage unit 184. Accordingly, even when the batteries 101A and 101B that are different for each periods Ta and Tc are used, information such as a cumulative working time of the lawn mower 6 can be accurately ascertained.

In FIG. 6, the battery 101 (for example, the first battery 101A) that has the same battery ID is used for each of the lawn mower 6 and the two-wheeled vehicle 7 (the periods Ta and Tb). However, even when the information is acquired from the storage unit of the battery 101 that has the same battery ID, the information acquisition unit 181 acquires the use history information separately for each electric apparatus (the lawn mower 6 and the two-wheeled vehicle 7) in which the first battery 101A is used. For example, at the time point t2, the information obtained from the storage unit of the first battery 101A is stored as information on the lawn mower 6 with the working machine ID attached to the information. At the time point t4, information obtained from the storage unit of the same first battery 101A is stored as information on the two-wheeled vehicle 7 with the vehicle ID attached to the information. Therefore, even when the same battery 101A is used for a plurality of electric apparatuses, the integration unit 182 can integrate the use history information for each electric apparatus.

The analysis unit 183 analyzes an operating status such as a continuous operating time, an output state, and power consumption of the specific load 205 based on the information on the power of the specific load 205 acquired by the information acquisition unit 181. The continuous operating time is a time from power-on of the specific load 205 to the present, that is, a cumulative time obtained by adding the operating time of the specific load 205. The output state is an output variation of the specific load 205, an overload operation time, a margin of an upper limit value of the output, or the like. The analysis by the analysis unit 183 is executed, for example, whenever the information acquisition unit 181 acquires information on the power of the specific load 205, and an analysis result is stored in the storage unit 184 along with the load ID.

The storage unit 184 stores the information acquired by the information acquisition unit 181, the information on the integration result by the integration unit 182, and the information on the analysis result by the analysis unit 183. On the other hand, information necessary for an operation of the electric storage apparatus 10 is stored in another storage unit of the device controller 10a. The storage unit 184 is configured as a storage medium detachably mounted on the casing 11 of the electric storage apparatus 10. Accordingly, when the electric storage apparatus 10 is replaced, the use history information of the electric apparatus and the like can be handed over to the new electric storage apparatus 10. The data stored in the storage unit 184 may be output to an external apparatus such as a personal computer in a house. Accordingly, even when the storage unit 184 is not configured to be detachably mounted on the casing 11, the data stored in the storage unit 184 can be transferred to the new electric storage apparatus 10 at the time of replacing of the electric storage apparatus 10.

The server apparatus 50 includes, as a functional configuration, an information acquisition unit 52, an information generation unit 53, a maintenance determination unit 54, and an output unit 55.

The information acquisition unit 52 acquires various types of information transmitted from the user terminal 20, that is, user information, apparatus information of the electric storage apparatus 10, and device information indicating the type of electric apparatus (the lawn mower 6 or the two-wheeled vehicle 7) or the specific load 205 via the communication unit 51. The acquired information includes a corresponding user ID, working machine ID, vehicle ID, and load ID. The acquired information is registered (stored) in the server apparatus 50. Further, the information acquisition unit 52 acquires information from the device controller 10a via the communication unit 51. That is, the information on the integration result by the integration unit 182 of the device controller 10a and the information on the analysis result by the analysis unit 183 are acquired along with the working machine ID, the vehicle ID, and the load ID.

The information generation unit 53 generates auxiliary information used to determine maintenance information of the lawn mower 6 and the two-wheeled vehicle 7 based on the information on the integration result acquired by the information acquisition unit 52. More specifically, the information generation unit 53 calculates a recommended maintenance time (for example, DD/MM/YY) based on the recommended maintenance period (for example, three years, five years, or the like) corresponding to the working machine ID or the vehicle ID stored in advance in the storage unit of the server apparatus 50, and uses the calculated recommended maintenance time as the auxiliary information. The auxiliary information also includes, as the maintenance and repair information, other information such as content of maintenance (inspection or repair), a maintenance method, tightness of maintenance (urgency), and cost. The recommended maintenance period may be the auxiliary information. Insurance information provided for insurance of a power apparatus itself such as an electric apparatus or insurance regarding use of the device or purchase support information provided for purchase support of a replacement apparatus that is a replacement or alternative of the device may be used as the auxiliary information. Here, the insurance of the device itself compensates for, for example, property damage occurring in the device, and the insurance regarding use of the device compensates for, for example, personal damage occurring in use of the device.

The information generation unit 53 also generates the auxiliary information supplied for maintenance of the specific load 205 based on the analysis result (for example, a continuous operating time) by the analysis unit 183 transmitted from the device controller 10a. In this case, the information generation unit 53 compares the recommended maintenance period with the continuous operating time with reference to the recommended maintenance period of the specific load 205 stored in advance in the storage unit 184, and generates information such as the recommended maintenance time and the maintenance content such as component replacement and cleaning as the auxiliary information. The recommended maintenance period may be the auxiliary information. In addition to the maintenance information (maintenance and repair information) supplied for maintenance and repair of the electric apparatus, insurance information used for insurance contracts related to the electric apparatus itself or use of the electric apparatus, and purchase support information supplied for purchase support of a replacement apparatus for the electric apparatus may be used as the auxiliary information. That is, at least one of the maintenance information, the insurance information, and the purchase support information may be used as the auxiliary information. Here, the insurance information includes insurance for a home electric appliance and a vehicle and insurance for a driver, and the purchase support information includes sales information. The replacement apparatus may be a replacement apparatus that is a replacement for an electric apparatus or an alternative apparatus that is a replacement for an electric apparatus.

The recommended maintenance period stored in the storage unit of the server apparatus 50 is assumed in a case where the user normally uses the electric apparatus. Instead of calculating the recommended maintenance time using the recommended maintenance period, the information generation unit 53 may change the recommended maintenance time based on the output state of the electric apparatus included in the information on the integration result. For example, when the electric apparatus is used in a state where a frequency of occurrence of a large output is high, the recommended maintenance time may be advanced.

Based on the auxiliary information generated by the information generation unit 53, the maintenance determination unit 54 determines how long until the recommended maintenance time comes or whether the recommended maintenance time has already come, and determines the maintenance information that is transmitted to the user terminal 20 according to the determination result. For example, when the recommended maintenance time approaches within a predetermined period, the maintenance determination unit 54 determines information on the remaining time (for example, one month) until the recommended maintenance time as the maintenance information. The recommended maintenance time may be obtained by the maintenance determination unit 54 without including the recommended maintenance time in the auxiliary information generated by the information generation unit 53.

The output unit 55 transmits the auxiliary information generated by the information generation unit 53 (for example, information on the recommended maintenance time) or the maintenance information determined by the maintenance determination unit 54 (for example, information indicating that the recommended maintenance time has already come) to the user terminal 20 at a predetermined timing via the communication unit 51. For example, for the user 1 that has the lawn mower 6 and the two-wheeled vehicle 7, the user 1 that has a user ID associated with the working machine ID and a vehicle ID is specified based on the user information or the like stored in the storage unit. Then, the auxiliary information or the maintenance information is transmitted to the user terminal 20 of the user 1. The output unit 55 transmits the maintenance information along with the working machine ID or the vehicle ID, for example, when a remaining time until the recommended maintenance time of the lawn mower 6 or the two-wheeled vehicle 7 is within a predetermined time.

When the information is transmitted, the output unit 55 determines whether a difference between the remaining time until the recommended maintenance time of the lawn mower 6 and the remaining time until the recommended maintenance time of the two-wheeled vehicle 7 is within a predetermined time (for example, one month). When it is determined that the difference is within the predetermined time, the output unit 55 simultaneously transmits the maintenance information on the lawn mower 6 and the two-wheeled vehicle 7 to the user terminal 20. Accordingly, when a maintenance contractor of the lawn mower 6 and a maintenance contractor of the two-wheeled vehicle 7 are the same, maintenance of a plurality of electric apparatuses can be performed at a time, and thus efficient maintenance is possible.

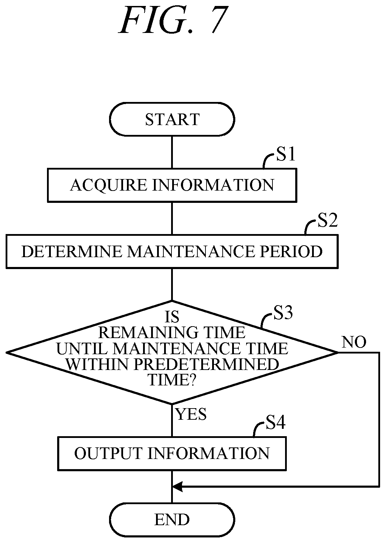

FIG. 7 is a flowchart illustrating an example of a process executed by the CPU of the server apparatus 50 according to a predetermined program. The process illustrated in the flowchart starts when, for example, the user information, the apparatus information, the device information, and the like transmitted via the user terminal 20 are registered in the server apparatus 50, and is repeated at a predetermined cycle. Hereinafter, the process will be described on the assumption that the lawn mower 6, the two-wheeled vehicle 7, and the specific load 205 are registered in the server apparatus 50.

First, in step S1, the information on the integration result by the integration unit 182 of the device controller 10a and the information on the analysis result by the analysis unit 183 are acquired along with the working machine ID, the vehicle ID, and the load ID.

Next, in step S2, a recommended maintenance period corresponding to each of the working machine ID, the vehicle ID, and the load ID is determined. The recommended maintenance period is, for example, a standard recommended maintenance period for each of the lawn mower 6, the two-wheeled vehicle 7, and the specific load 205 stored in advance in the storage unit of server apparatus 50. Further, in step S2, the recommended maintenance periods of the lawn mower 6, the two-wheeled vehicle 7, and the specific load 205 are determined based on the recommended maintenance period. In this case, the recommended maintenance time may be adjusted based on the output information included in the integration result information acquired in step S1. For example, when the output is relatively large, the recommended maintenance time may be advanced.

Subsequently, in step S3, it is determined whether the remaining time until the recommended maintenance time determined in step S2 is within a predetermined time. This determination is performed for each of the lawn mower 6, the two-wheeled vehicle 7, and the specific load 205. The predetermined time is determined in consideration of a timing at which the user is notified of the maintenance information. For example, it is set to about one month. When the determination is positive in step S3, the process proceeds to step S4. When the determination is negative, the process ends.

In step S4, the maintenance information of any of the lawn mower 6, the two-wheeled vehicle 7, and the specific load 205 to be determined in step S3 is transmitted to the user terminal 20 via the communication unit 51, and the process ends. In this case, when a difference between the remaining times of the plurality of determination targets (for example, the lawn mower 6 and the two-wheeled vehicle 7) is within a predetermined time (for example, one month), the maintenance information is simultaneously transmitted to the plurality of determination targets.

According to the present embodiment, the following operations and effects can be achieved.
(1) The electric storage apparatus 10 serving as a holding apparatus that holds the battery 101 includes: an apparatus-side terminal (a first connection portion) 15a to which the battery-side terminal 101b serving as a connection portion of the battery 101 is detachably connected; and a device controller 10a (an information acquisition unit 181) serving as a receiving part that receives and acquires stored information stored in a storage unit of the battery 101 such as a memory of the battery ECU 102 when the battery-side terminal 101b is connected to the apparatus-side terminal 15a (FIG. 5). The stored information includes attachment counterpart information such as use history information that is information on a power apparatus different from the electric storage apparatus 10, that is, the power apparatus such as the lawn mower 6 or the two-wheeled vehicle 7, stored when the battery 101 is mounted on the power apparatus. Accordingly, the use history information or the like can be acquired from the power apparatus that does not include a wireless communication unit via the battery 101, and maintenance information or the like can be provided to the user based on the information.
(2) For example, the information acquisition unit 181 acquires stored information (first stored information) including first attachment counterpart information such as use history information when the first battery 101A is mounted on the lawn mower 6 in a period Ta (a first period), and stored information (second stored information) including second attachment counterpart information such as use history information when the first battery 101A is mounted on the two-wheeled vehicle 7 in a period Tb (a second period) different from the period Ta (FIG. 6). Accordingly, when the same battery 101 (for example, the first battery 101A) is mounted on a plurality of electric apparatuses (the lawn mower 6 and the two-wheeled vehicle 7), the use history information or the like of the plurality of electric apparatuses can be acquired via the same battery 101A. The information acquisition unit 181 may receive the first stored information and the second stored information at the same timing or at different timings.
(3) The electric storage apparatus 10 further includes an integration unit 182 that integrates the first stored information such as the use history information of the lawn mower 6 and the second stored information such as the use history information of the two-wheeled vehicle 7 acquired by the information acquisition unit 181, and a communication unit 16 that transmits an integration result integrated by the integration unit 182 to the external server apparatus 50 (an information processing apparatus) (FIG. 5). Accordingly, the plurality of pieces of use history information in different periods, acquired by the single battery 101A, can be integrated for each working machine ID and each vehicle ID, and an integration result can be transmitted to the server apparatus 50. As a result, the server apparatus 50 can generate maintenance information or the like based on the integration result.
(4) The server apparatus 50 includes a communication unit 51 and an information acquisition unit 52 that receive and acquire the integration result transmitted by the communication unit 16, and the information generation unit (a generation unit) 53 that generates auxiliary information (for example, information on a recommended maintenance time) served for maintenance (maintenance and repair) of the lawn mower 6 and the two-wheeled vehicle 7 based on the integration result acquired by the information acquisition unit 52 (FIG. 5). Accordingly, the server apparatus 50 can satisfactorily generate the auxiliary information useful for the maintenance information.
(5) The server apparatus 50 includes an output unit 55 and the communication unit 51 that output the auxiliary information generated by the information generation unit 53 and transmit the auxiliary information to the user terminal (a communication terminal) 20 owned by the user 1 of the lawn mower 6 and the two-wheeled vehicle 7 (FIG. 5). The user here includes not only a user of the electric apparatus but also an owner or a manager. Further, the user also includes a user, an owner, and a manager of the specific load 205. Accordingly, the user can easily recognize the information on the recommended maintenance time.
(6) The server apparatus 50 further includes the maintenance determination unit (a determination unit) 54 that determines that the recommended maintenance time for the lawn mower 6 and the two-wheeled vehicle 7 has arrived or will arrive, or determines a recommended maintenance time, based on the auxiliary information generated by information generation unit 53 (FIG. 5). Accordingly, the server apparatus 50 can appropriately determine the arrival of the maintenance time of the electric apparatuses such as the lawn mower 6 and the two-wheeled vehicle 7.
(7) The server apparatus 50 includes the communication unit 51 that simultaneously transmits maintenance information (notification information) on the lawn mower 6 and the two-wheeled vehicle 7 to the user terminal 20 of the user 1 who owns the lawn mower 6 and the two-wheeled vehicle 7 when the recommended maintenance time (a first period) of the lawn mower 6 and the maintenance time (a second period) of the two-wheeled vehicle 7, which are generated by the information generation unit 53 and determined by the determination unit 54, are close to each other, that is, when a difference between the first period and the second period is within a predetermined time (FIG. 5). Accordingly, the maintenance of the lawn mower 6 and the two-wheeled vehicle 7 can be completed at a time, and thus efficient maintenance is possible.
(8) The information acquisition unit 181 acquires the stored information (third stored information) including the third attachment counterpart information such as use history information when the first battery 101A is mounted on the lawn mower 6 in the period Ta (third period), and the stored information (fourth stored information) including the fourth attachment counterpart information such as use history information when the second battery 101B is mounted on the lawn mower 6 in the period Tc (fourth period) different from the period Ta (FIG. 6). Accordingly, when the different batteries 101 are mounted on the lawn mower 6 at different times, information on the lawn mower 6 can be comprehensively obtained via the batteries 101. When the period Ta is the first period, the third period may be a period different from the first period, and the third attachment counterpart information may be attachment counterpart information when the first battery 101A is mounted on the same power apparatus (the lawn mower 6) on which the first battery 101A is to be mounted in the first and third periods. Even in this case, the fourth period is a period different from the third period.
(9) The electric storage apparatus 10 further includes an integration unit 182 that integrates the third stored information and the fourth stored information such as the use history information of the lawn mower 6 acquired by the information acquisition unit 181 and a communication unit 16 that transmits the integration result integrated by the integration unit 182 to the external server apparatus 50 (FIG. 5). Accordingly, even when the batteries 101A and 101B that are different for each periods Ta and Tc are used, information such as a cumulative working time of the lawn mower 6 can be accurately ascertained.
(10) The electric storage apparatus 10 further includes a storage unit 184 that stores the stored information stored in the storage unit of the battery 101 and acquired by the information acquisition unit 181, that is, the stored information such as the use history information of the electric apparatus such as the lawn mower 6 (FIG. 5). Accordingly, by reading the stored information from the storage unit 184 when the electric storage apparatus 10 is replaced, it is possible to appropriately determine the maintenance time or the like of the electric apparatus even after the electric storage apparatus 10 is replaced.
(11) The storage unit 184 is detachably provided in the electric storage apparatus 10. Accordingly, when the electric storage apparatus 10 is replaced, it is possible to easily hand over the use history information or the like of the electric apparatus to a new electric storage apparatus.
(12) The electric storage apparatus 10 further includes an output terminal 121 which is electrically connected to the apparatus-side terminal 15a and to which the specific load 205 as an external electric load is connected (FIG. 4). Accordingly, power from the battery 101 can be supplied to the specific load 205 via the output terminal 121.
(13) The electric storage apparatus 10 includes an information acquisition unit (an output power acquisition unit) 181 that acquires information on power output from the output terminal (a second connection portion) 121 when the specific load 205 is connected to the output terminal 121 (FIG. 5). Accordingly, not only a mode of supply of power from the battery 101 to the electric apparatus can be ascertained via the storage unit of the battery 101, but also a mode of supply of power to the specific load 205 can be ascertained.
(14) The electric storage apparatus 10 further includes: an analysis unit 183 that analyzes information (connection object information) on the specific load 205 connected to the output terminal 121 based on the information on the power acquired by the information acquisition unit 181; and a communication unit 16 that transmits an analysis result analyzed by the analysis unit 183 to the external server apparatus 50 (FIG. 5). Accordingly, a process related to maintenance of the specific load 205 can be performed by the server apparatus 50 using the analysis result of the analysis unit 183.
(15) The server apparatus 50 includes a communication unit 51 that receives the analysis result by the analysis unit 183 transmitted via the communication unit 16, and an information generation unit 53 that generates auxiliary information served for maintenance (maintenance and repair) of the specific load 205 based on the received analysis result (FIG. 5). Accordingly, the server apparatus 50 can generate the auxiliary information such as the recommended maintenance time of the specific load 205. The auxiliary information may include at least one of maintenance repair information served for maintenance and/or repair of the specific load 205 (an electrical load), insurance information served for insurance regarding the electrical load itself or use of the electrical load, and purchase support information served for purchase support of a replacement apparatus that is a replacement or alternative to the electrical load.
(16) The server apparatus 50 includes the maintenance determination unit 54 that determines that a recommended maintenance time of the specific load 205 has come or will come or determines a recommended maintenance time, based on the auxiliary information generated by the information generation unit 53 (FIG. 5). Accordingly, the server apparatus 50 can appropriately determine arrival of the maintenance time of the specific load 205.

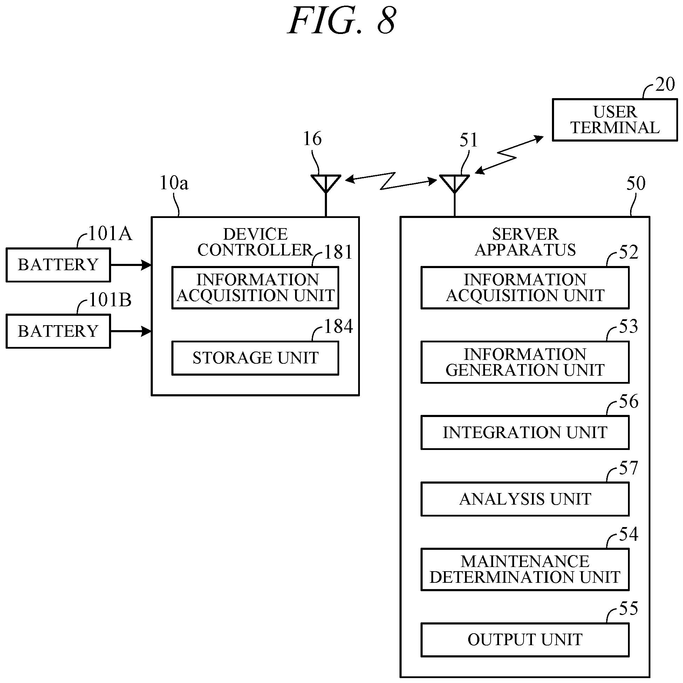

The above embodiment can be varied into various forms. Some variations will be described below. In the above embodiment (FIG. 5), the device controller 10a included in the electric storage apparatus 10 functions as the information acquisition unit 181, the integration unit 182, the analysis unit 183 and the storage unit 184, and the server apparatus 50 as an information processing apparatus functions as the information acquisition unit 52, the information generation unit 53, the maintenance determination unit 54, and the output unit 55. However, some functions of the device controller 10a may be undertaken by the server apparatus 50. For example, as shown in FIG. 8, which is a modification of FIG. 5, the integration unit 182 and the analysis unit 183 may be omitted from the device controller 10a, and the integration unit 56 and the analysis unit 57 may be added to the server apparatus 50.

The operation in this case will be as follows. The communication unit 16 of the device controller 10a transmits the first stored information obtained from the battery 101 mounted on the lawn mower 6 and the second stored information obtained from the battery 101 mounted on the two-wheeled vehicle 7, and the communication unit 51 of the server apparatus 50 receives these first and second stored information. The integration unit 56 integrates the first stored information and second stored information and the information generation unit 53 generates auxiliary information based on the integration result. Furthermore, the communication unit 16 of the device controller 10a transmits the third stored information obtained from the first battery 101A mounted on the lawn mower 6 and the fourth stored information obtained from the second battery 101B, and the communication unit 51 of the server apparatus 50 receives this third stored information and fourth stored information. The integration unit 56 integrates the third stored information and the fourth stored information and the information generation unit 53 generates auxiliary information based on the integration result. Moreover, the communication unit 16 of the device controller 10a transmits the information on the power of the specific load 205 acquired by the information acquisition unit 181, and the communication unit 51 of the server apparatus 50 receives this information. Then, the analysis unit 57 analyzes the operating conditions of the specific load 205, and the information generation unit 53 generates auxiliary information based on the analysis result.

In the above embodiment, information such as the working machine ID, operation information, power consumption of the lawn mower (first attachment counterpart information), and information such as the vehicle ID, operation information, power consumption of the two-wheeled vehicle (second mounted information) are acquired via the battery 101 detachably provided in the electric storage apparatus 10, but it is also possible to use an electric storage device other than the battery, and the configuration of the electric storage device is not limited to those described above. Instead of an electric storage device that accumulates electric power, it is also possible to use a portable energy storage device that stores energy or energy sources other than electric power. For example, a hydrogen tank that stores hydrogen may be used as a portable energy storage device.

In the above embodiment, an example of mounting the battery 101 on the lawn mower 6 and the two-wheeled vehicle 7 is described, but a power apparatus and another power apparatus to which the present invention is applied are not limited to those described above. In the above embodiment, an example of providing an electric storage apparatus 10 (a holding apparatus) on site at a house 2 is described, but the holding apparatus to which the present invention is applied is not limited to site at a house, and can be provided in various locations.

In the above embodiment, the server apparatus 50 is configured as an information providing apparatus, but the information providing apparatus can also be used as an information processing method that processes information from a holding apparatus that has a first connection portion (apparatus-side terminal 15a) to which a connection portion of an electric storage device (battery-side terminal 101b) can be detachably connected, and a receiving part (device controller 10a) that receives stored information stored in a storage part of the electric storage device when the connection portion of the electric storage device is connected to the first connection portion. More specifically, the storage information includes attachment counterpart information, which is information on the power apparatus stored when the electric storage device is mounted on a power apparatus different from the holding apparatus, and the processing method includes receiving first stored information, which is stored information including first attachment counterpart information that is the attachment counterpart information when the electric storage device is mounted on the power apparatus in a first period, receiving second stored information, which is stored information including second attachment counterpart information that is the attachment counterpart information when the electric storage device is mounted on another power apparatus different from the power apparatus in a second period different from the first period, and integrating the first stored information and the second stored information as an integration result.

Furthermore, the present invention can be configured by replacing the above information providing method with a program for executing process based on information from a holding apparatus that has a first connection part to which a connection part of an electric storage device can be detachably connected and a receiving part receiving stored information stored in a storage part of the electric storage device when the connection part of the electric storage device is connected to the first connection part, on a computer. Furthermore, the present invention can be configured by replacing it with a computer-readable storage medium in which this program is stored.

The above explanation is an explanation as an example and the present invention is not limited to the above embodiment or modifications unless sacrificing the characteristics of the invention. The above embodiment can be combined as desired with one or more of the above modifications. The modifications can also be combined with one another.

### REFERENCE SIGNS LIST

6 lawn mower, 7 two-wheeled vehicle, 10 electric storage apparatus (holding apparatus), 10a device controller, 15 apparatus-side terminal, 16 communication unit, 20 user terminal, 50 server apparatus, 51 communication unit, 53 information generation unit, 54 maintenance determination unit, 100 management system, 101 battery, 101b battery-side terminal, 102 battery ECU, 181 information acquisition unit, 182 integration unit, 183 analysis unit, 184 storage unit, 205 specific load

## Claims

1. A holding apparatus comprising:
a first connection portion to which a connection portion of an electric storage device is detachably connected; and
a receiving part configured to receive stored information stored in a storage part of the electric storage device when the connection portion of the electric storage device is connected to the first connection portion, wherein
the stored information includes attachment counterpart information, and
the attachment counterpart information is information on a power apparatus stored when the electric storage device is mounted on the power apparatus different from the holding apparatus.

2. The holding apparatus according to claim 1, wherein
the receiving part is configured to receive first stored information and second stored information as the stored information,
the first stored information includes first attachment counterpart information as the attachment counterpart information when the electric storage device is mounted on the power apparatus in a first period, and
the second stored information includes second attachment counterpart information as the attachment counterpart information when the electric storage device is mounted on another power apparatus different from the power apparatus in a second period different from the first period.

3. The holding apparatus according to claim 2, further comprising:
(i) an integration unit configured to integrate the first stored information and the second stored information received by the receiving part; and a transmitting part configured to transmit an integration result integrated by the integration unit to an information processing apparatus outside, or
(ii) a transmitting part configured to transmit the first stored information and the second stored information received by the receiving part to an information processing apparatus outside.

4. The holding apparatus according to claim 3, wherein
the information processing apparatus includes:
(i) another receiving part configured to receive the integration result transmitted by the transmitting part; and a generation unit configured to generate auxiliary information including at least one of maintenance repair information served for a maintenance and/or repair of at least one apparatus of the power apparatus and the another power apparatus, insurance information served for an insurance of the at least one apparatus itself or an insurance of use of the at least one apparatus, and purchase support information served for a purchase support of a replacement apparatus as a replacement of the at least one apparatus, based on the integration result received by the another receiving part, or
(ii) another receiving part configured to receive the first stored information and the second stored information transmitted by the transmitting part; another integration unit configured to integrate the first stored information and the second stored information received by the another receiving part; and a generation unit configured to generate auxiliary information including at least one of maintenance repair information served for a maintenance and/or repair of at least one apparatus of the power apparatus and the another power apparatus, insurance information served for an insurance of the at least one apparatus itself or an insurance of use of the at least one apparatus, and purchase support information served for a purchase support of a replacement apparatus as an replacement of the at least one apparatus, based on the integration result integrated by the another integration unit.

5. The holding apparatus according to claim 4, wherein
the information processing apparatus is configured to transmit the auxiliary information generated by the generation unit to a communication terminal used by any of a user, an owner and a manager of the at least one apparatus of the power apparatus and the another power apparatus.

6. The holding apparatus according to claim 4 or 5, wherein
the auxiliary information includes the maintenance repair information, and
the information processing apparatus further includes a determination unit configured to determine that a time for the maintenance and/or repair of the power apparatus or the another power apparatus has arrived, predict that a time for the maintenance and/or repair arrives, or determine a time for the maintenance and/or repair, based on the auxiliary information generated by the generation unit.

7. The holding apparatus according to claim 6, wherein
the information processing apparatus further includes another transmitting part configured to transmit notification information to a communication terminal used by any of a user, an owner and a manager of the power apparatus and the another power apparatus when a difference between a first time as a time for the maintenance and/or repair of the power apparatus determined by the determination unit and a second time as a time for the maintenance and/or repair of the another power apparatus determined by the determination unit is within a predetermined time, and
the notification information includes any one of that the time for the maintenance and/or repair of the power apparatus and the another power apparatus has arrived, that the time for the maintenance and/or repair of the power apparatus and the another power apparatus arrives, or the first time or the second time.

8. The holding apparatus according to any one of claims 2 to 7, wherein
the receiving part is configured to receive third stored information and fourth stored information as the stored information,
the third stored information includes third attachment counterpart information as the attachment counterpart information when in a third period different from the first period, the electric storage device is mounted on the power apparatus used as an attachment object in the first period and
the fourth stored information includes fourth attachment counterpart information as the attachment counterpart information when in a fourth period different from the third period, another electric storage device different from the electric storage device is mounted on the power apparatus used as the attachment object in the third period.

9. The holding apparatus according to claim 8, further comprising:
(iii) an integration unit configured to integrate the third stored information and the fourth stored information received by the receiving part; and a transmitting part configured to transmit an integration result integrated by the integration unit to an information processing apparatus outside, or
(iv) a transmitting part configured to transmit the third stored information and the fourth stored information received by the receiving part to an information processing apparatus outside.

10. The holding apparatus according to claim 9, wherein
the information processing apparatus includes:
(iii) another receiving part configured to receive the integration result transmitted by the transmitting part; and a generation unit configured to generate auxiliary information including at least one of maintenance repair information served for a maintenance and/or repair of the power apparatus, insurance information served for an insurance of the power apparatus itself or an insurance of use of the power apparatus, and purchase support information served for a purchase support of a replacement apparatus as an replacement of the power apparatus, based on the integration result received by the another receiving part, or
(iv) another receiving part configured to receive the third stored information and the fourth stored information transmitted by the transmitting part; another integration unit configured to integrate the third stored information and the fourth stored information received by the another receiving part; and a generation unit configured to generate auxiliary information including at least one of maintenance repair information served for a maintenance and/or repair of the power apparatus, insurance information served for an insurance of the power apparatus itself or an insurance of use of the power apparatus, and purchase support information served for a purchase support of a replacement apparatus as an replacement of the power apparatus, based on the integration result integrated by the another integration unit.

11. The holding apparatus according to claim 10, wherein
the information processing apparatus is configured to transmit the auxiliary information generated by the generation unit to a communication terminal used by any of a user, an owner and a manager of the power apparatus.

12. The holding apparatus according to any one of claims 1 to 11, further comprising
another storage part configured to store the stored information received by the receiving part.

13. The holding apparatus according to claim 12, wherein
the another storage part is provided attachably and detachably in the holding apparatus.

14. The holding apparatus according to any one of claims 1 to 13, further comprising
a second connection portion electrically connected to the first connection portion and configured so that an electric load outside is connected to the second connection portion.

15. The holding apparatus according to claim 14, further comprising
an output power acquisition unit configured to acquire information of power output from the second connection portion when the electric load is connected to the second connection portion.

16. The holding apparatus according to claim 15, further comprising:
(v) an analysis unit configured to analyze connection object information as information on the electric load connected to the second connection portion, based on the information of power acquired by the output power acquisition unit; and a transmitting part configured to transmit an analysis result analyzed by the analysis unit to an information processing apparatus outside, based on the information of power acquired by the output power acquisition unit, or
(vi) a transmitting part configured to transmit the information of power acquired by the output power acquisition unit to an information processing apparatus outside.

17. The holding apparatus according to claim 16, wherein
the information processing apparatus includes:
(v) another receiving part configured to receive the analysis result transmitted by the transmitting part; and a generation unit configured to generate auxiliary information including at least one of maintenance repair information served for a maintenance and/or repair of the electric load, insurance information served for an insurance of the electric load itself or an insurance of use of the electric load, and purchase support information served for a purchase support of a replacement apparatus as a replacement of the electric load, based on the analysis result received by the another receiving part, or
(vi) another receiving part configured to receive the power transmitted by the transmitting part; another analysis unit configured to analyze the power received by the another receiving part; and a generation unit configured to generate auxiliary information including at least one of maintenance repair information served for a maintenance and/or repair of the electric load, insurance information served for an insurance of the electric load itself or an insurance of use of the electric load, and purchase support information served for a purchase support of a replacement apparatus as a replacement of the electric load, based on an analysis result analyzed by the another analysis unit.

18. The holding apparatus according to claim 17, wherein
the information processing apparatus further includes another transmitting part configured to transmit the auxiliary information generated by the generation unit to a communication terminal used by any of a user, an owner and a manager of the electric load.

19. The holding apparatus according to claim 17 or 18, wherein
the auxiliary information includes the maintenance repair information, and
the information processing apparatus further includes a determination unit configured to determine that a time for the maintenance and/or repair of the electric load has arrived, predict that the time for the maintenance and/or repair arrives, or determine the time for the maintenance and/or repair, based on the auxiliary information generated by the generation unit.

20. An information processing apparatus communicably connected to a holding apparatus, the holding apparatus including a first connection portion to which a connection portion of an electric storage device is detachably connected and a receiving part receiving stored information stored in a storage part of the electric storage device when the connection portion of the electric storage device is connected to the first connection portion, the stored information including attachment counterpart information as information on a power apparatus stored when the electric storage device is mounted on the power apparatus different from the holding apparatus, the receiving part of the holding apparatus receiving first stored information including first attachment counterpart information as the attachment counterpart information when the electric storage device is mounted on the power apparatus in a first period, and second stored information including second attachment counterpart information as the attachment counterpart information when the electric storage device is mounted on another power apparatus different from the power apparatus in a second period different from the first period,
the information processing apparatus comprising:
(i) another receiving part configured to receive an integration result of the first stored information and the second stored information received by the receiving part of the holding apparatus, the integration result being integrated by an integration unit of the holding apparatus, or
(ii) another receiving part configured to receive the first stored information and the second stored information received by the receiving part of the holding apparatus; and another integration unit configured to integrate the first stored information and the second stored information received by the receiving part.

21. The information processing apparatus according to claim 20, further comprising
(i) a generation unit configured to generate auxiliary information including at least one of maintenance repair information served for a maintenance and/or repair of at least one apparatus of the power apparatus and the another power apparatus, insurance information served for an insurance of the at least one apparatus itself or an insurance of use of the at least one apparatus, and purchase support information served for a purchase support of a replacement apparatus as a replacement of the at least one apparatus, based on the integration result received by the receiving part, or
(ii) a generation unit configured to generate auxiliary information including at least one of maintenance repair information served for a maintenance and/or repair of at least one apparatus of the power apparatus and the another power apparatus, insurance information served for an insurance of the at least one apparatus itself or an insurance of use of the at least one apparatus, and purchase support information served for a purchase support of a replacement apparatus as an replacement of the at least one apparatus, based on a integration result integrated by the integration unit.

22. An information processing method processing information from a holding apparatus, the holding apparatus including a first connection portion to which a connection portion of an electric storage device is detachably connected and a receiving part receiving stored information stored in a storage part of the electric storage device when the connection portion of the electric storage device is connected to the first connection portion, the stored information including attachment counterpart information as information on a power apparatus stored when the electric storage device is mounted on the power apparatus different from the holding apparatus, and
the information processing method comprising:
receiving first stored information including first attachment counterpart information as the attachment counterpart information when the electric storage device is mounted on the power apparatus in a first period;
receiving second stored information including second attachment counterpart information as the attachment counterpart information when the electric storage device is mounted on another power apparatus different from the power apparatus in a second period different from the first period; and
integrating the first stored information and the second stored information as a integration result.

23. The information processing method according to claim 22, further comprising
generating auxiliary information including at least one of maintenance repair information served for a maintenance and/or repair of at least one apparatus of the power apparatus and the another power apparatus, insurance information served for an insurance of the at least one apparatus itself or an insurance of use of the at least one apparatus, and purchase support information served for a purchase support of a replacement apparatus as a replacement of the at least one apparatus, based on the integration result.

24. A program for executing a process based on information from a holding apparatus in a computer, the holding apparatus including a first connection portion to which a connection portion of an electric storage device is detachably connected and a receiving part receiving stored information stored in a storage part of the electric storage device when the connection portion of the electric storage device is connected to the first connection portion, the stored information including attachment counterpart information as information on a power apparatus stored when the electric storage device is mounted on the power apparatus different from the holding apparatus,
the program executing:
receiving first stored information including first attachment counterpart information as the attachment counterpart information when the electric storage device is mounted on the power apparatus in a first period;
receiving second stored information including second attachment counterpart information as the attachment counterpart information when the electric storage device is mounted on another power apparatus different from the power apparatus in a second period different from the first period; and
integrating the first stored information and the second stored information as a integration result.

25. A computer-readable storage medium configured to store the program according to the claim 24.
